Europäisches Patentamt

European Patent Office

Office européen des brevets

(19)

(11) Publication number: **0 070 144**

**A1**

(12) **EUROPEAN PATENT APPLICATION**

(21) Application number: **82303558.9**

(22) Date of filing: **07.07.82**

(51) Int. Cl.³: **B 60 S 9/12**
**F 15 B 13/06, F 16 K 11/06**

(30) Priority: **07.07.81 GB 8120916**

(43) Date of publication of application:
**19.01.83 Bulletin 83/3**

(84) Designated Contracting States:
**AT BE CH DE FR GB IT LI NL SE**

(71) Applicant: **ONAR HYDRAULIC LIMITED**
**Oriel House 43/44 North Hill**
**Colchester CO1 1PY(GB)**

(72) Inventor: **Middlemore, Lorraine**
**26, Elizabeth Road**
**Brentwood, Essex(GB)**

(74) Representative: **Ford, Michael Frederick et al,**
**MEWBURN ELLIS & CO. 2/3 Cursitor Street**
**London EC4A 1BQ(GB)**

(54) **Landing legs for vehicle semi-trailer.**

(57) Landing legs 10 for the semi-trailer of an articulated lorry are operated hydraulically using the vehicle's compressed air to pump hydraulic fluid. In such an arrangement a liquid control valve is provided at a valve block 100,101 intimate with a pump 60 facilitating production and assembly. The pump 60 reciprocates automatically so that one control operation can effect full travel of the legs. Mechanical latches 43 lock the legs 10 and cannot be released under load.

FIG 1.

EP 0 070 144 A1

Landing legs for vehicle semi-trailer

The present invention relates to landing gear for the semi-trailer of an articulated vehicle, that is to say one or more legs at the opposite end to the road-wheels of the trailer and used to support the uncoupled end when detached from the power cab.

It is conventional to provide landing gear consisting of two legs which may be raised during road travel and lowered to support the semi-trailer when required. It is customary for these legs to be raised or lowered by a mechanical arrangement and such arrangements are difficult and time consuming to operate. Thus there is often a reluctance on the part of the person operating the legs to move them to their full travel. In particular it is very tempting for the driver merely to raise the legs by only the amount needed to give clearance for normal, smooth roads. It then happens from time to time that the vehicle is driven over a bump in this condition or driven onto a ramp such as a loading ramp leading to a ferry boat and because the legs have not been fully raised they strike the ground and are damaged.

U.S. Patent 3177664 and U.K Patent 1099599 describe landing gear in which the legs are driven downwardly by hydraulic pressure generated using pneumatic pressure from the vehicle's air brake system. A reciprocating pump is used to boost this pressure when required. Air pressure is used directly to raise the legs in each case. In these proposals every stroke of the pump must be commanded by movement of a manual control. Both of these proposals show a pump, reservoir for hydraulic liquid and control valves connected by pipework in a fairly complicated arrangement.

French specification 2265588 describes a landing leg operated by fluid pressure (although the type of fluid is not specified). This specification describes a mechanical arrangement for preventing undesired retraction of the leg.

Despite these prior proposals, it remains normal practice to employ mechanically operated landing legs.

Broadly, the present invention seeks to provide an improved arrangement by which one or more legs may be raised or lowered easily and quickly. The legs are operated hydraulically, using hydraulic liquid pressurised with another fluid, which is usually compressed air from the vehicle's braking system. A reciprocating pump is used to provide an enhanced pressure, at least for part of the downward extension of the legs. One aspect of the invention is characterised in that a control valve governing flow of oil to landing gear is incorporated in a common assembly with the pump, preferably without intervening pipework. This gives an economical construction with simpler and more economical assembly, giving apparatus which can more readily be fitted to a semi-trailer. Preferably the control valve is provided at a valve block which incorporates a chamber of the pump in which hydraulic liquid is pressurised.

Preferably the reciprocating pump includes valve means for causing reciprocation of the pump to repeat automatically. Preferably also, a single operation of a manual control enables the landing gear to proceed through its full travel in the upward direction. More preferably there is a single manual control which effects all movements of the landing gear, with respective single operations of this control enabling full movement in either direction.

A second aspect of this invention is characterised in that the landing gear is fitted with a mechanical locking device to prevent accidental retraction, this locking device being such as to engage automatically on lowering the landing gear and releasable only when the load on the landing gear is not otherwise supported. It is convenient to employ latches or ratchets whose release

4.                              0070144

is prevented except when the load on the legs is supported by hydraulic pressure.

Embodiments of this invention will now be described, with reference to the accompanying drawings, in which:

Fig. 1 is a front view of a landing leg, partly sectioned;

Figs. 2 and 3 are detail rear and sectional side views, showing the latch mechanism;

Fig. 4 shows the pump in section;

Fig. 5 shows a first form of valve block in section on line V-V of Fig. 6;

Fig. 6 shows the end face of the block, as seen on arrow VI of Fig. 5 with connections to the block indicated diagrammatically;

Fig. 7 shows the block of Fig. 5 in section on line VII-VII of Figs. 5 and 7, together with an operating ring around the block ;

Fig. 8 is a schematic view of a second arrangement;

Fig. 9 shows a second form of valve block, partly in section;

Fig. 10 is a section through the block and its spool on line X-X of Fig.9;

Fig. 11 is a section through the spool on line XI-XI of Fig. 10;

Fig. 12 is a side view illustrating the manual controls used with the arrangement of Figs. 8 to 11.

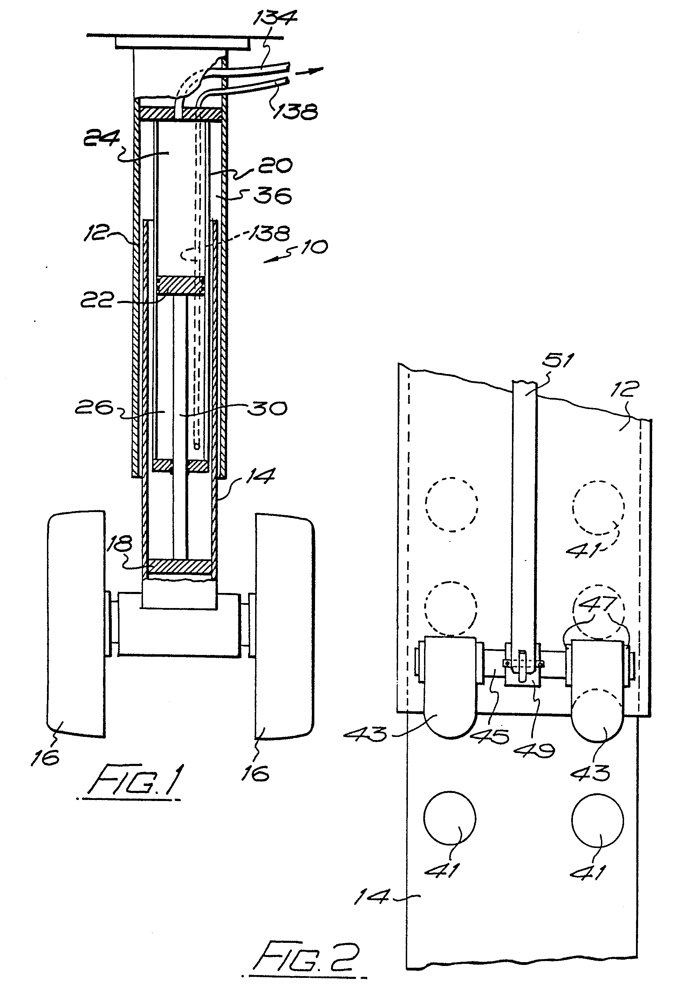

Referring first to Fig. 1 the landing gear of a semi-trailer comprises a pair of telescopic legs 10, one at each side. Each leg has two leg parts 12 and 14, the lower one of which is slidable in the other. The lower leg part 14 has wheels 16 at its lower end which contact the road surface when the wheels are in the extended position, so that the semi-trailer is supported on its road wheels and the wheels 16. The wheels 16 are also an additional precaution against damage to the lower leg part if this lower leg part 14 should strike an obstruction.

The upper leg part 12 houses a double acting hydraulic cylinder 20 divided into upper and lower chambers 24,26 by a piston 22. A cross member 18 fast with the lower leg part 14 is connected to the piston 22 by a piston rod 30. Conduits 134,138 communicate with the upper and lower chambers 24,26. These conduits are led out through the wall of the leg part 12 at its upper end, as shown.

The cylinder 20 and the conduits 134,138 are arranged so that there is a gap 36 into which the upper portion of the lower leg part 14 is received when the leg 10 is in its retracted position.

In operation the leg 10 is extended by pumping hydraulic liquid e.g. hydraulic oil, under pressure through conduit 134 into the upper chamber 24 whilst at the same time permitting the fluid from the lower chamber 26 to pass through conduit 138 to a reservoir. To retract the leg, the procedure is reversed. The conduits 134 of both legs are connected together, and likewise their conduits 138 are connected, so that both legs of the landing gear extend and retract together.

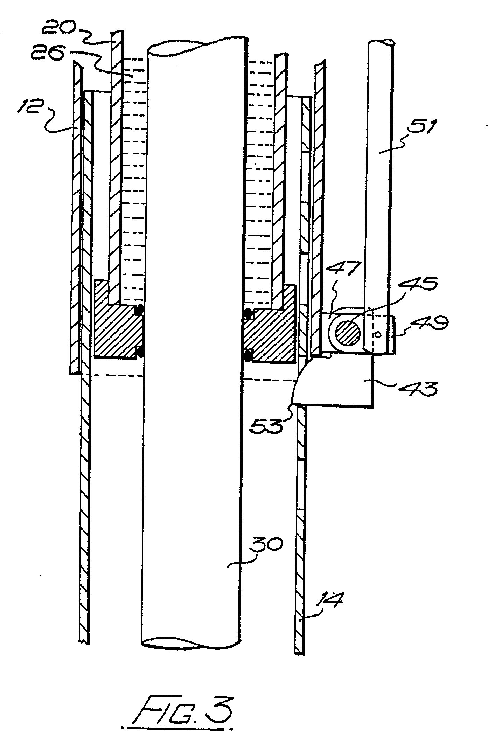

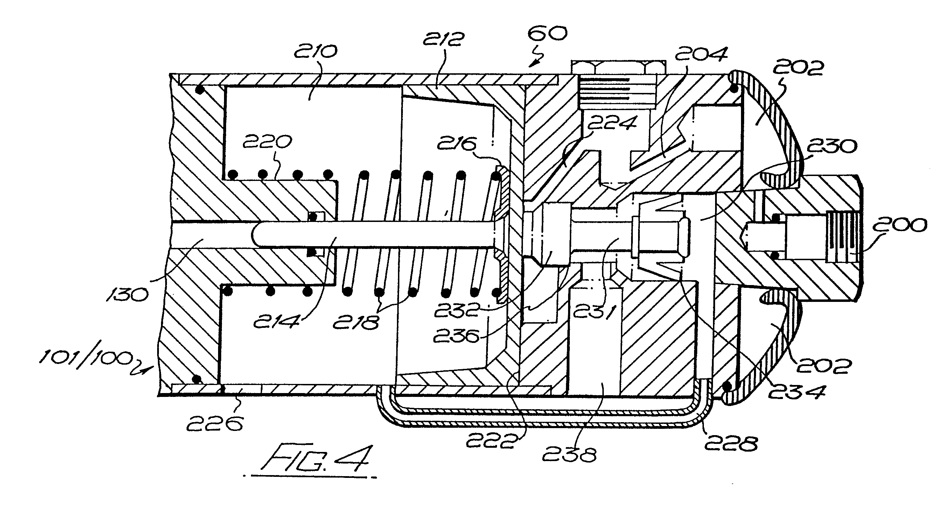

Each leg is provided with a mechanical locking mechanism, shown in Figs. 2 and 3, which allows extension but blocks retraction until the mechanism is deliberately released. The rear face of each lower part contains four pairs of holes 41. A pair of latches 43 are pivotally mounted fast with a shaft 45 journalled in brackets 47 on the upper leg part 12. A crank 49 on this shaft 45 is pivotally connected to a releasing rod 51.

The latches 43 have curved faces 53 which allow them to be pushed out as the leg extends. However, the weight of the parts attached to each shaft 45 exerts a turning moment which pushes the latches into the holes 41. The legs are normally extended sufficiently to allow the latches to engage holes 41, and then the latches will take the load on the legs, preventing retraction, if the hydraulic pressure is released. When the load on the legs is taken by hydraulic pressure the latches 43 can be released by an upward pull on the rod 51. The operator may find it necessary to extend the legs very slightly further, first. The rods 51 at each side of the trailer are both connected to a single operating handle serving to pull them up together. However, because the releasing of the latches entails some downward travel of their extremities 53, a pull applied manually to the rods 51, even with the assistance of an operating lever, will not be sufficient to disengage the latches when they carry the load on the legs.

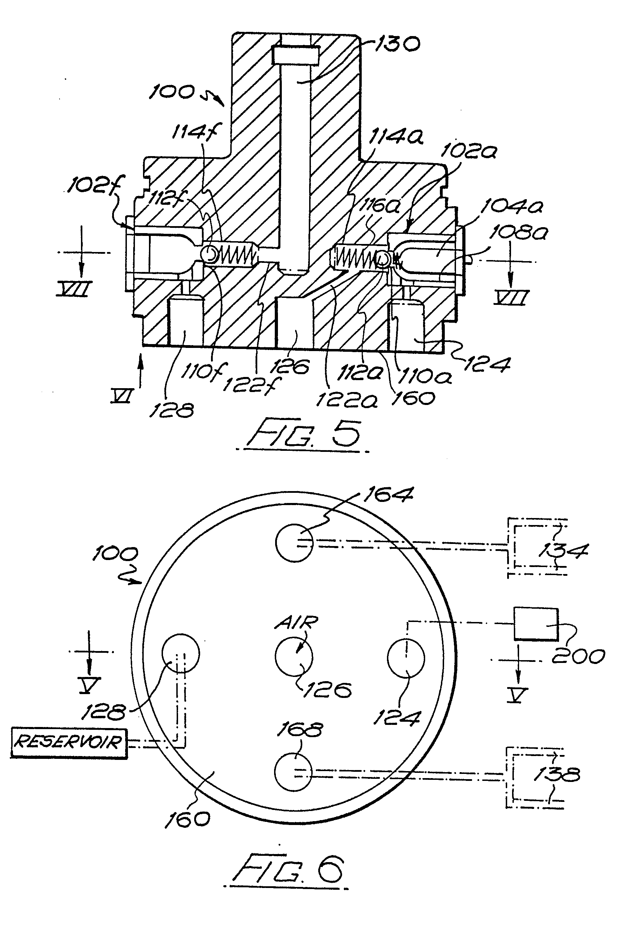

The legs 10 are extended and retracted using hydraulic liquid pressurised with compressed air from the vehicle's braking system. A pump 60 shown in Fig. 4 is used to generate a hydraulic liquid pressure in excess of the air pressure, and this is needed at least for the last part of the extension of the legs, when they take the load on the trailer.

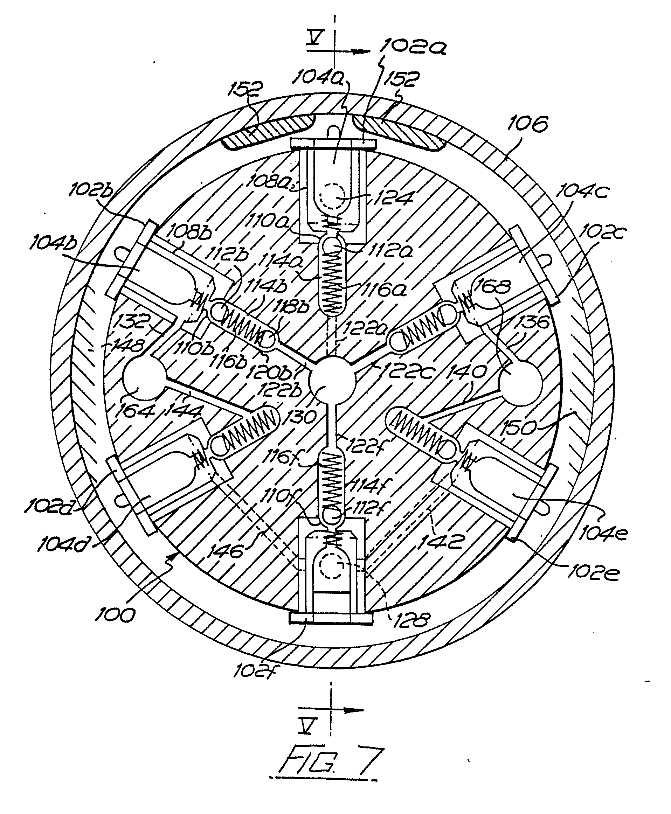

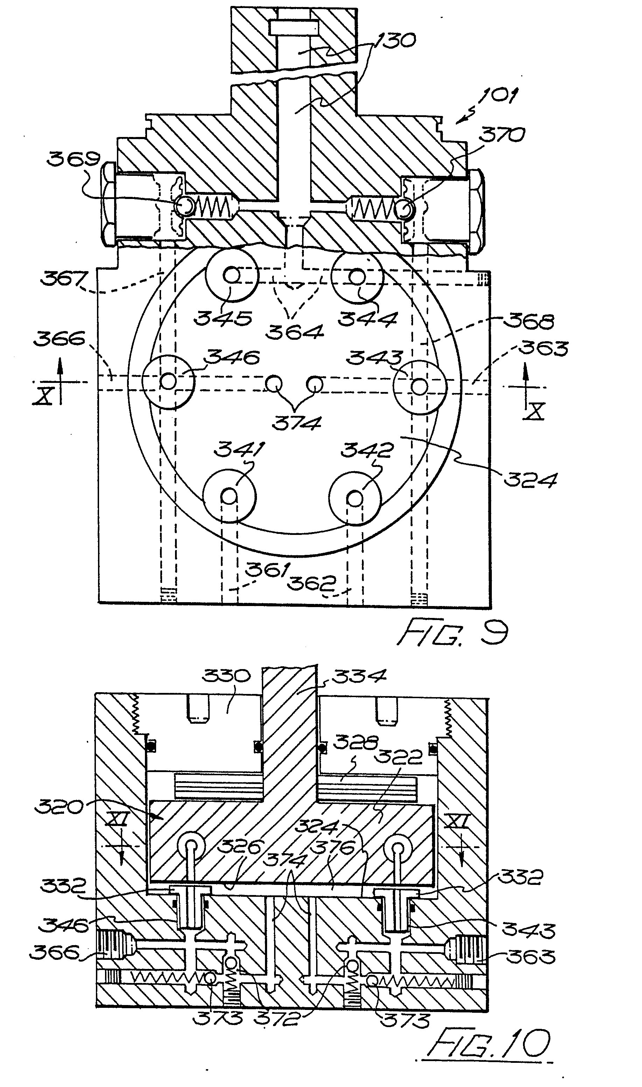

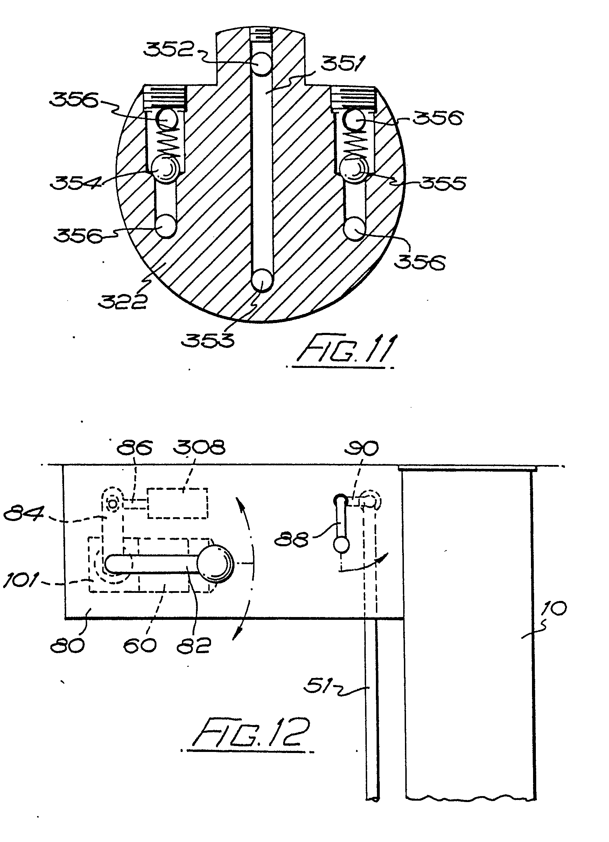

The pump 60 is generally similar to that shown in U.K Patent Specification 1288180. The pump is intimate with a valve block which may be either the valve block 100 shown in Figs. 5 to 7, or the block 101 shown in Figs. 9 to 11. In either case the block includes a chamber 130 in which hydraulic liquid is pressurised by the pump.

The pump 60 has an inlet 200 for compressed air which communicates with a chamber 202, which the air leaves by a bore 204. Compressed air inevitably contains some moisture and this may collect in the line to the pump, resulting in a mass of water suddenly entering the inlet 200. The pump can tolerate small amounts of moisture in the compressed air but such a mass of water might damage it, or at least interrupt its operation. The chamber 202 prevents any mass of water from passing on into the pump. Instead it collects in the chamber 202 and passes on in small amounts only (by evaporation).

The pump section has a pump chamber 210, in which is located a piston 212 and a piston rod 214. One end of the piston rod 214 is received in the chamber 130 of the valve block whilst the other end is secured to a washer 216. A spring 218 extends between an abutment surface 220 of the valve block and the washer 216 to force the piston rod 214 out of the chamber 130 and maintain the washer 216 in contact with the piston 212. The force thus exerted on piston 214 biases it into abutment with surface 222.

When compressed air is admitted at 200 it passes through bores 204 and 224 to the pump chamber 210. This forces the piston 212 away from surface 222, compressing the spring 218 and forcing the piston rod 214 into chamber 130. This is the compression stroke of the pump, which drives liquid under pressure out of chamber 130 through valving to be described below. Excess air from the pump chamber 210 escapes through hole 226.

When the piston 212 has moved its full stroke, conduit 228 communicates with the high pressure side of the pump chamber 210 so that compressed air passes through conduit 228 into a bore 230.

Bore 230 contains a valve body 231 having a head 232 and a resilient collar 234 at opposite ends. The head 232 normally abuts against a seat 236 thereby sealing bore 230 from pump chamber 210. However, when compressed air enters bore 230 the pressure of the air on the collar 234 forces the valve body 231 to move in the bore 230 towards the piston 212. The valve head 232 is lifted from its seat 236 and in doing so it blocks bore 224 so that no more compressed air is delivered to the pump chamber 210 and at the same time establishes communication between the pump chamber and a part of the bore 230 which communicates with the atmosphere through opening 238 and hence the air pressure in the pump chamber 210 is reduced.

The spring 218 then forces the piston 212 towards surface 222. The piston rod 214 moves outwardly from the chamber 130 of the valve block. This is the suction stroke of the pump in which fluid is drawn from a reservoir through valving into the chamber 130.

As the piston 212 moves towards surface 222 it contacts the valve head 232 and moves the valve body 231 back into the bore 230. This re-opens conduit 224, and contact between the valve head 232 and its seat 236 reseals the bore 238 from the pump chamber 210. This cycle continues automatically for as long as compressed air is supplied to the inlet 200.

Figs. 5 to 7 show a first form of valve block 100 which is used when liquid is drawn from a single reservoir and delivered by the pump to accomplish both the extension and retraction of the legs.

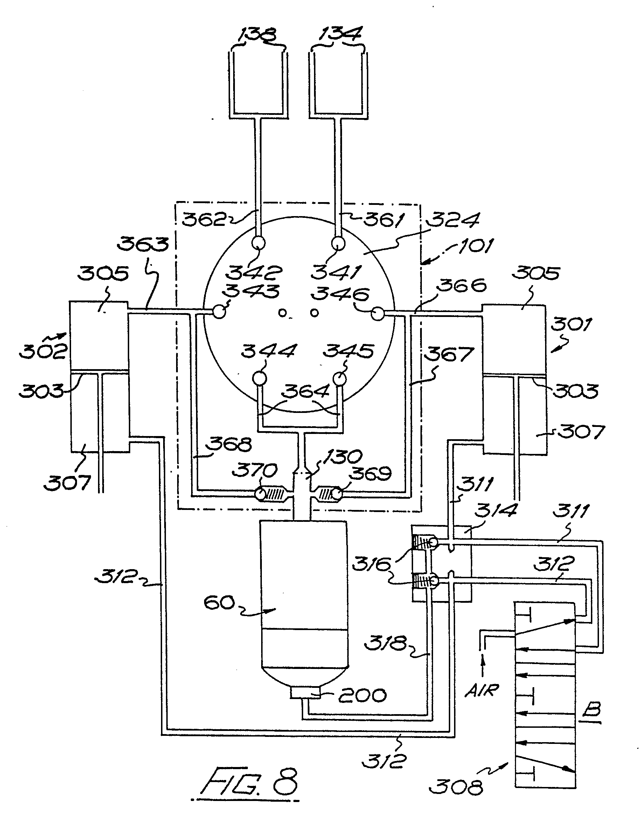

The valve block is generally cylindrical, and at its end 160 shown by Fig. 6, opposite to the chamber 130, it has a compressed air inlet 126, a compressed air outlet 124 which is connected to the pump inlet 200 by an external pipe (not shown), an opening 128 connected to a reservoir for hydraulic liquid and openings 164, 168 respectively connected to the conduits 134,138 leading to the legs.

As shown by Fig. 7 the cylindrical valve block 100 contains six valves 102a to 102f arranged radially around circumference of the valve. The valves may, for example, have ball shaped valve members held against a seat by a spring. Each of valves 102a to 102e has an associated operating member 104a to 104e which projects outwardly from the valve block 100 to cooperate with an actuating member 106 which is arranged encircling the valve block (Fig. 7). The operating members 104a to 104e open the corresponding valve 102a to 102e when depressed.

As can be seen from Fig. 7 the operating member 104a is in the form of a spring loaded plunger in a bore 108a in the valve 102a. The end of the bore 108a forms a valve seat 110a against which a ball 112a in a valve chamber 114a is held by a spring 116a. When the operating member 104a is depressed in the bore 108a against its spring 116a it unseats the ball 112a thereby opening the valve 102a. Valves 102d and 102e are similar to valve 102a. Valve 102b has the same features as valve 102a but has a second ball 118b at the end of the valve chamber 114b furthest from the first ball 112b which is held by the spring 116b against a seat 120b leading to a bore 122b. High pressure liquid in the bore 122b lifts the ball 118b off its seat 120b but the valve 102b is only open when the ball 112b is also moved off its seat 110b by the operating member 104b.

The purpose of ball 118b is to give a non-return function preventing liquid flow in the wrong direction through the valve - i.e. past ball 112a then past ball 112b. Valve 102c is similar to valve 102b. Valve 102f has no operating member, and has a single ball 112f held against a seat 110f by spring 116f, the ball 112f being lifted off its seat 110f by the suction of liquid into valve chamber 114f but preventing return flow.

Valve 102a is a valve to control the air supply to the pump, through inlet 126, the bore 122a leading to the valve chamber 114a and hence to the outlet 124.

Valve 102f is a low pressure liquid inlet valve connected between the liquid reservoir and the pump. On the suction stroke of the pump fluid is drawn through conduit 128 and valve 102f via bore 122f into chamber 130. Valve 102f is a non-return valve so that liquid cannot return to the reservoir on the compression stroke of the pump.

Valves 102b and 102c govern the delivery of hydraulic liquid under pressure to either the conduits 134 or the conduits 138, and hence to either the upper or lower chambers in the cylinders 20. The valves 102d and 102e enable the flow of hydraulic liquid from the chambers which are not pressurised, back to the reservoir.

The actuating member 106 is an annulus concentric with the block 100. It carries internal projections 148,150 at diametrically opposite positions, and two smaller projections 152. The actuating member 106 can be turned either to open the valves 102b and 102e or the valves 102c and 102d. In either case the air valve 102a is opened.

Operation is as follows. If the actuating member is turned either clockwise or anticlockwise air is passed through the valve 102a, hence to the pump inlet 200. The pump pressurises the liquid in chamber 130 on its compression stroke and the pressurised liquid is supplied to both of valves 102b,102c through bores 122b,122c respectively. Only one of these valves can be open. If, for example, the actuating member 106 has been turned anticlockwise, as seen in Fig. 7, to depress operating member 104b and so open valve 102b, the pressurised liquid can flow to conduit 132 hence to opening 164 and into the conduits 134 leading to the upper chambers 24, extending the legs. Valve 102c is closed to prevent pressurised liquid flowing to the lower chambers 26. However, valve 102e is open, allowing liquid from chambers 26 to flow via conduits 138, opening 168, conduit 140, valve 102e, conduit 142 and opening 128 to the reservoir.

If the operating member is turned clockwise as seen in Fig. 7, the valves 104c and 104d are open. Pressurised liquid can flow via conduit 136 to opening 168 leading to conduits 138 and so the lower chambers 26, retracting the legs. Liquid from the upper chambers returns to the reservoir via conduits 134,144, valve 104d and conduit 146.

In this arrangement, consequently, the pump 60 supplies all the hydraulic liquid to extend or retract the landing gear. A single operation of the actuating member 106, namely turning it one way or the other, enables the landing gear to extend or retract fully.

Fig. 8 shows schematically a second pump and valve arrangement, which uses the same pump 60 shown in Fig. 4, but a different valve block 101 and two reservoirs 301,302 for hydraulic liquid. Each reservoir is a cylinder divided by a piston 303 into respective chambers 305,307 for hydraulic liquid and air.

Air from the vehicle's braking system is supplied to a three position air valve 308 which can deliver the air either to conduit 311 or to conduit 312, venting the other conduit in each case, or can shut off the air and vent both conduits 311,312. The valve 308 can be a sliding spool valve of conventional type.

The conduits 311,312 lead through a block 314 to the air chambers of the reservoirs 301,302. Non-return valves 316 in this block provide that air pressure in either conduit 311,312 pressurises conduit 318 leading to the pump's air inlet 200.

The valve block 101 shown in Figs. 9 and 10 is intimate with the pump, and incorporates a chamber 130 in which the hydraulic liquid is pressurised. A valve 320 governing the flow of hydraulic liquid is provided on the valve block 101 and is operated simultaneously with the air valve 308.

The valve 320 has a cylindrical spool 322 (Figs. 10 and 11) rotatable over a flat face 324 on the valve block 101. The face 324 includes six ports evenly distributed in a circular array, and the spool 322 also has six ports in its confronting face 326, connected by passages within the spool. As shown by Fig. 10, the spool runs on a bearing 328 sandwiched between the spool and a retaining nut 330. Poppets 332 are provided in the ports in the face 324. The hydraulic liquid pressure urges these into sealing contact with the spool's face 326. The spool 322 is fast with a shaft 334 by which it is turned.

The conduits 134 leading to the upper chambers 24 of the landing legs' cylinder 20 are connected through bore 361 to port 341. The conduits 138 are connected through bore 362 to port 342. The chamber 130 is connected to the ports 344 and 345 by bores 364. The liquid chamber of reservoir 301 is connected through bore 366 to port 346 and also connected through bore 367 to a non-return valve 369 connected to the chamber 130. Correspondingly, the reservoir 302 is connected through bore 363 to port 343, and also connected to chamber 130 through bore 368 and non-return valve 370.

The spool 322 has a diametral passage 351 between its ports 352,353, and side passages which each contain non-return valves 354,355 and connect adjacent ports 356. In the central position of the spool none of the spool's ports align with ports in the face 324. Consequently there is no flow.

To extend the legs the air valve 308 is switched to pressurise conduit 311 and reservoir 301. Air is delivered to the pump, via one non-return valve 316 and so the pump operates. Simultaneously the liquid valve spool 322 is turned 30° clockwise. Hydraulic liquid is delivered via bores 366,367 and valve 369 to the chamber 130 during the suction stroke of the pump, then during the pressure stroke it flows from port 344 through the diametral spool passage 351 to the port 341, and hence to the conduits 134 and the legs's upper chambers 24. The non-return valves 369,370 prevent the pumping of liquid into either reservoir during the pressure stroke of the pump.

The lower chambers 26 of the legs are connected to the other reservoir 302, via conduits 138, bore 362 and non-return valve 355 connecting ports 342 and 343. This reservoir 302 is vented, so liquid can flow to it from the lower chambers 26. Since there is no hydraulic pressure at all in chambers 26, the air pressure on reservoir 301 can drive liquid directly to the chambers 24, by-passing the pump, as long as the pressure provided by the air above is sufficient to overcome any resistance to movement of the leg. This by-pass flow can proceed from port 346 through non-return valve 354 in the spool to port 345 which is connected to the port 344 via the bores 364.

While the leg is first extending from its fully retracted position the resistance to its movement will be small. Most of the liquid supplied to the upper chambers 24 will have by-passed the pump, although the pump does run and supplies some liquid. The by-pass flow effects movement at a greater speed than the pump can do, because a given volume of liquid delivered as by-pass flow requires an equal volume of air whereas pumped flow requires a greater volume of air. When the leg reaches the ground and comes under load the unmagnified air pressure will not be able to extend the leg further, but the pump continues to run, increasing the pressure in the chambers 24 and so extending the legs further at slower speed. It will be appreciated that this change over takes place automatically, and will occur whenever the resistance to extension of the leg is sufficient to stop the by-pass flow.

Since both the non-return valve 369 and the non-return valve 354 deliver to bores connected to chamber 130 and port 345, some by-pass flow will pass through valve 369, and some flow into the chamber 130 during the pump's suction stroke may pass through valve 354. However, the valves 354 and 369 prevent return to the reservoir 301 at any time.

If the spool 322 is turned anti-clockwise and the air valve 308 set to pressurise reservoir 302, the legs are retracted by an exact converse of the arrangement described. Hydraulic liquid at the air pressure is delivered through bore 363 to port 343 and is available via valve 370 to the chamber 130 during the pump's suction stroke, and as by-pass flow via non-return valve 355 which now connects ports 343 and 344. Liquid flows from port 345 through bore 351 to port 342 and hence to conduits 138. Return of liquid along conduits 134 passes from port 341 through non-return valve 354 to port 346 and hence to the reservoir 301.

If the legs encounter resistance during retraction the by-pass flow can cease, and the pump will increase the liquid pressure in the lower chambers 26 to effect slower, more forceful movement.

The valve shown in Figs. 9 to 11 can be made to handle pressures well in excess of 600 bar. The valve shown in Figs. 5 to 7 can also be made to handle such pressures, although less conveniently.

The pump shown in Fig. 4 generates a hydraulic pressure which is greater than the incoming air pressure by a factor which depends on the ratio of the cross-sectional areas of the rod 214 and piston 212.

These areas are preferably arranged to multiply the pressure more than sixty times, and typically they will multiply it eighty or one hundred times. A commercial vehicle's compressed air is normally at about 7 bar. The cross-sectional areas are preferably chosen to give a hydraulic liquid pressure in excess of 600 bar, which is considerably more than the usual pressure in vehicle hydraulic systems.

The flows of hydraulic liquid are basically between reservoir 301 and the legs' upper chambers 24, and between reservoir 302 and the legs' lower chambers 26. Some mixing occurs only because a common pump and oil valve are used. Nevertheless it is conceivable that some net flow from one reservoir to the other could occur, and potentially this could lead to overfilling of one reservoir. To relieve any such overfilling the valve block 101 includes further connections shown in Fig. 10. Non-return valves 372 have relatively forceful closing springs so that there is normally no flow through them, but if the pressure in either reservoir exceeds a predetermined limit the pressure in the bore 363 or 366 connected to that reservoir is relieved through the associated valve 372 into the associated one of small bores 374 leading to the cavity 376. The pressure then escapes through the other bore 374 to the other reservoir, passing through one of non-return valves 373 which are set to open at a lower pressure than the valves 372. Thus overfilling of either reservoir automatically relieves into the other reservoir. The bores 374 and valves 373 also allow any high pressure liquid which may leak past a poppet 332 into the cavity 376 to escape back to the reservoirs.

Fig. 12 shows the positioning of the controls on a semi-trailer. A plate 80 is mounted below one side of the trailer body just behind one of the legs 10. The pump 60 and valve block 101 are mounted behind the plate 80 with a control lever 82 attached to the spool operating shaft 334. The air valve is also mounted behind the plate 80, and a crank 84 on the shaft 334 is connected to the air valve 308 by a rod 86, so that when the control lever 82 is turned to turn the spool 322, it also effects the associated operation of the valve 308. Depressing the lever 82 30o from the horizontal is all that is required to effect extension of the legs to their full extent. Release of the latches 43 and raising of the lever 82 is all that is needed to effect full retraction of the legs. A second lever 88 is provided to release the latches 43. This lever is connected to a pivoted shaft extending across the width of the semi-trailer, and which carries a crank 90 at each side, connected to the rod 51 at that side. Moving the lever 88 forward raises the rods 51 to release the latches.

CLAIMS:

1. Extensible landing gear for a vehicle semi-trailer comprising at least one leg, a piston and cylinder operatively connected to effect extension of the leg, a reciprocating pump to supply hydraulic liquid to the cylinder to effect movement of the piston therein, the pump being powered by fluid at a relatively lower pressure to supply hydraulic liquid at a higher pressure, and liquid valve means governing delivery of liquid to the cylinder, characterised in that the liquid valve means is incorporated in a common assembly with the pump.

2. Landing gear according to claim 1 further comprising releasable mechanical locking means to prevent retraction of the leg, the locking means permitting extension of the leg and automatically engaging to prevent retraction thereof, and having a release mechanism which is inoperable when load on the landing gear is supported by the mechanical locking means.

3. Landing gear according to claim 1 or claim 2 wherein the liquid valve means is provided at a valve block, which incorporates a chamber of the pump wherein said hydraulic liquid is pressurised by the pump.

4. Landing gear according to claim 3 wherein the liquid valve means comprises a cylindrical spool rotatable over a circular face on said valve block, both the face on the valve block and the confronting face of the cylindrical spool having arrays of ports alignable upon rotation of the said spool.

5. Landing gear according to any one of the preceding claims wherein the pump includes valves for the lower pressure fluid arranged to cause repeated automatic reciprocation of the pump, the landing gear including second valve means controlling supply of the lower pressure fluid to the pump, and having a single manual control connected to operate both the said second valve means and the said liquid valve means to cause operation of the pump and extension or retraction of the landing gear.

6. Landing gear according to any one of the preceding claims wherein the said cylinder is double acting and having a single manual control connected to operate the liquid valve means to permit passage of hydraulic liquid pressurised by the pump selectively to either one of the chambers of the cylinder and simultaneously to permit return of hydraulic liquid from the other one of its chambers.

7.   Landing gear according to any one of the preceding claims comprising two liquid reservoirs pressurisable by the lower pressure fluid which drives the pump, and also comprising at least one non-return valve enabling liquid to flow from a reservoir to the cylinder, by-passing the pump, as long as the lower pressure of the fluid is sufficient to move the piston in the cylinder, but preventing the greater pressure generated by the pump from being released into that reservoir when the said greater pressure is required to move the piston in the cylinder.

8.   Landing gear according to claim 1 having separate reservoirs for supplying hydraulic liquid for extension and retraction of the landing gear respectively, there being further valve means enabling flow of liquid from either one of said reservoirs into the other if the hydraulic liquid pressure in the first one exceeds a predetermined value.

9.   Extensible landing gear for a vehicle semi-trailer comprising at least one leg, a piston and cylinder operatively connected to effect extension of the leg, a reciprocating pump to supply hydraulic liquid to the cylinder to effect movement of the piston in the cylinder, the pump being powered by fluid at a relatively lower pressure to supply hydraulic liquid at a higher pressure, and liquid valve means governing delivery of liquid to the cylinder, characterised by releasable mechanical locking means to prevent retraction of the leg, the locking means permitting extension of the leg and automatically engaging to prevent retraction thereof, and having a release mechanism which is inoperable when load on the landing gear is supported by the mechanical locking means.

_FIG.1_

_FIG.2_

_FIG.3_

0070144

FIG. 4.

FIG. 5

FIG. 6

FIG. 7

FIG. 8

FIG. 9

FIG. 10

FIG.11

FIG.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-3 177 664 (KONKLE) *Column 6, line 26 to column 7, line 70; figures 1-13* | 4,5,6 | B 60 S 9/12 F 15 B 13/00 F 16 K 11/06 |
| D,A | GB-A-1 099 599 (CENTRAL STEEL TUBE CIE) *Page 6, line 23 to page 7, line 53; figures 1-15* | 4,5,6 | |
| D,A | FR-A-2 265 588 (KNORR-BREMSE GmbH) *Page 8; claim 1; figures 1-6* | 2,9 | |
| A | FR-A-1 001 266 (LEBOUCHER) *Page 2, left-hand column, paragraph 4 to right-hand column, paragraph 4; figures 1-5* | 1,3,4 | |
| A | GB-A- 223 769 (TASTONHOYE) *Page 1, line 100 to page 2, line 87; figures 1-6* | 1,3,4 | TECHNICAL FIELDS SEARCHED (Int. Cl. ³) |
| A | GB-A- 356 240 (THARRE) *Page 4, lines 32-72; figures 1-9* | 3,4,6 | B 60 S B 62 D F 15 B F 16 K F 04 B |
| A | US-A-2 140 264 (KINGHAM) *Page 3, left-hand column, line 39 to right-hand column, line 31; figures 4-8* | 2,9 | |

-/-

The present search report has been drawn up for all claims

| Place of search | Date of completion of the search | Examiner |
|---|---|---|
| THE HAGUE | 04-10-1982 | ESPEEL R.P. |

European Patent
Office

**EUROPEAN SEARCH REPORT**

| | **DOCUMENTS CONSIDERED TO BE RELEVANT** | | Page 2 | |
|---|---|---|---|---|
| Category | Citation of document with indication, where appropriate, of relevant passages | Relevant to claim | **CLASSIFICATION OF THE APPLICATION (Int. Cl. ³)** | |
| P | US-A-4 318 550 (JACOBSEN) *The whole document* | 4-6 | | |
| A | US-A-4 235 542 (PATERIK) | | | |
| A | GB-A- 860 052 (BOSCH) | | | |
| A | GB-A- 761 690 (DEBAND) | | | |
| A | GB-A- 559 656 (BENDIX) | | | |
| A | GB-A- 416 983 (MILLER) | | **TECHNICAL FIELDS SEARCHED (Int. Cl. ³)** | |

The present search report has been drawn up for all claims

| Place of search THE HAGUE | Date of completion of the search 04-10-1982 | Examiner ESPEEL R.P. |
|---|---|---|

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO Form 1503 03.82